Europäisches Patentamt

European Patent Office

Office européen des brevets

(11) Veröffentlichungsnummer: **0 176 891**
**A2**

(12) # EUROPÄISCHE PATENTANMELDUNG

(21) Anmeldenummer: 85111938.8

(22) Anmeldetag: 20.09.85

(51) Int. Cl.⁴: **G 01 N 30/60**

(30) Priorität: 02.10.84 DE 3436095

(43) Veröffentlichungstag der Anmeldung:
09.04.86 Patentblatt 86/15

(84) Benannte Vertragsstaaten:
BE CH DE FR GB IT LI NL SE

(71) Anmelder: Merck Patent Gesellschaft mit beschränkter Haftung
Frankfurter Strasse 250
D-6100 Darmstadt(DE)

(72) Erfinder: Müller, Peter
Kleiststrasse 14
D-6100 Darmstadt(DE)

(72) Erfinder: Gunkel, Werner
Wingertsweg 33
D-6101 Rossdorf 2(DE)

(72) Erfinder: Sättler, Günther
Scribastrasse 15
D-6107 Reinheim 1(DE)

(72) Erfinder: Wintermeyer, Willi, Dr.
Gartenstrasse 4
D-6104 Seeheim 2(DE)

(54) Chromatographiesäule.

(57) Es werden Säulen für Hochdruckflüssigkeitschromatographie beschrieben, die im wesentlichen aus einem mit einem Sorbens befüllbaren Rohr und einer Einlaß- und einer Auslaßvorrichtung an den Enden des Rohres bestehen, wobei in dem Rohr zusätzlich Stützelemente zur Stabilisierung der Sorbenspackung vorgesehen sind.

Merck Patent Gesellschaft
mit beschränkter Haftung
61 Darmstadt


Chromatographiesäule


Die Anmeldung betrifft eine Säule für die Hochdruckflüssigkeitschromatographie im wesentlichen bestehend aus einem mit einem Sorbens befüllbaren Rohr und einer Einlaß- und einer Auslaßvorrichtung an den Enden des Rohres.

Um Säulen mit gutem Auflösungsvermögen zu erhalten, verwendet man in der Regel ein sehr feinkörniges Sorbensmaterial, z.B. Kieselgel mit einer Teilchengröße von etwa 5 bis 50 µm, das in die Säule möglichst gleichmäßig und in dichter Packung eingebracht wird. Dazu wird gewöhnlich die Säule an einem Ende mit einer ein Filterelement enthaltenden Auslaßvorrichtung verschlossen und über eine am anderen Ende aufgesetzte Füllvorrichtung mit einer Aufschlämmung des Sorbensmaterials befüllt, wobei das Sorbensmaterial von dem Filterelement zurückgehalten wird, während die Trägerflüssigkeit weitgehend ungehindert passieren kann. Das Befüllen erfolgt unter einem vorgegebenen hohen Druck von bis zu einigen 100 bar, z.B. bis zu 500 bis 700 bar, wobei sehr dichte Packungen erzielt werden.

Beim Abkuppeln der Füllvorrichtung nach Beendigung des Füllvorganges kann der Druck auf die Packung jedoch nicht aufrechterhalten werden. Es hat sich gezeigt, daß es bei dieser Entspannung zu einem Zurückfedern der Packung kommt und das Sorbens zum Teil wieder aus dem Säulenrohr herausquillt. Die beim Füllen aufgebaute Feststoffspannung wird wieder abgebaut und es kann beim Betrieb der Säule unter einem dann wieder vorhandenen hohen Druck zu einem Zusammensacken der Packung kommen.

Es sind bereits zahlreiche Anstrengungen gemacht worden, dies zu verbessern. So werden z.B. in der DE-OS 30 21 366 und der EP-OS 00 40 663 Chromatographiesäulen beschrieben, bei denen durch einen aufgepreßten Kolben die Sorbenspackung stabilisiert wird. In der DE-OS 30 00 475 wird eine Säule beschrieben, die eine flexible Außenwand besitzt, wobei durch eine radiale Kompression der Trennsäule eine Stabilisierung der Packung erzielt wird.

Alle diese Lösungen erfordern zum einen einen erheblichen technischen Aufwand und zum anderen kann nicht sichergestellt werden, daß eine einmal entspannte Packung durch äußeren Durck wieder in einen der ursprünglichen Packungsdichte entsprechenden Zustand gebracht werden kann.

Es bestand daher die Aufgabe, eine Möglichkeit zu finden, die beim Befüllen der Säule aufgebaute Feststoffspannung zu erhalten und damit eine stabile Packung mit dauerhaft guten Trenneigenschaften zu erhalten.

Es wurde nun überraschenderweise gefunden, daß diese Aufgabe dadurch gelöst werden kann, daß man in der Säule Einbauten vorsieht, die den Aufbau einer Feststoffspannung beim Befüllen der Säule nicht behindern, aber einer Entspannung der Sorbenspackung entgegenwirken.

Gegenstand der Erfindung ist daher eine Säule für die Hochdruckflüssigkeitschromatographie im wesentlichen bestehend aus einem mit einem Sorbens befüllbaren Rohr und einer Einlaß- und einer Auslaßvorrichtung an den Enden des Rohres, die dadurch gekennzeichnet ist, daß in dem Rohr Stützelemente zur Stabilisierung der Sorbenspackung vorgesehen sind.

Gegenstand der Erfindung ist auch ein Verfahren zum Füllen einer Säule für die Hochdruckflüssigkeitschromatographie, wobei die Säule an einem Ende mit einer ein Filterelement enthaltenden Auslaßvorrichtung verschlossen wird und vom anderen Ende her über eine Füllvorrichtung mit einer Aufschlämmung eines Sorbensmaterials in einer Trägerflüssigkeit unter einem vorgegebenen hohen Druck befüllt wird, wobei das Sorbensmaterial von dem Filterelement zurückgehalten wird, während die Trägerflüssigkeit weitgehend ungehindert passieren kann, und nach dem Befüllen an der Eingangsseite mit einer Einlaßvorrichtung verschlossen wird, das dadurch gekennzeichnet ist, daß vor dem Befüllen in das Säulenrohr zumindest ein Stützelement eingebracht wird, welches das Entspannen der Sorbenspackung nach dem Ende des Befüllens verhindert.

Gegenstand der Erfindung ist weiterhin die Verwendung einer solchen Säule in der Hochdruckflüssigkeitschromatographie.

Hauptvorteil der erfindungsgemäßen Säule ist es, daß sowohl beim Abnehmen der Füllvorrichtung als auch beim späteren Wechsel der Ein- und Auslaßvorrichtungen, z.B. Endverschraubungen, die Sorbenspackung unter dem vorgegebenen Druck verbleibt. Wesentlich zur Erreichung dieses Ergebnisses ist es, daß durch die in das Säulenrohr eingebauten Stützelemente innerhalb des Säulenquerschnitts eine ausreichende Zahl von Stützflächen vorgesehen sind, gegen die die Sorbensteilchen sich abstützen können.

In den Zeichnungen sind einige bevorzugte Ausgestaltungen der erfindungsgemäßen Säulen mit eingebauten Stützelementen gezeigt.

Figur I zeigt einen Schnitt durch ein Ende einer erfindungsgemäßen Säule, die als Stützelement eine Lochplatte enthält.

Figur II zeigt einen Schnitt durch die gleiche Säule im ungefüllten Zustand.

Figur III zeigt einen Schnitt durch den Einlaßteil einer erfindungsgemäßen Säule mit einer Lochplatte als Stützelement, wobei zwischen Lochplatte und Säulenende eine austauschbare Vorsäule integriert ist.

Figur IV ist eine Aufsicht auf die in Figur II gezeigte Vorrichtung.

PAT LOG 4 270684

Figur V zeigt einen Schnitt durch ein Ende einer erfindungsgemäßen Säule mit einem Gittergerüst als Stützelement.

Figur VI zeigt eine Aufsicht auf die Vorrichtung gemäß Figur V.

Figur VII zeigt einen Schnitt durch ein Ende einer erfindungsgemäßen Säule, die sowohl ein Gittergerüst als auch eine Lochplatte als Stützelement enthält.

Mit 1 ist darin das Säulenrohr bezeichnet, mit 2 eine Reduzierverschraubung und mit 3 eine Lochplatte. 4 ist eine Fritte und 5 ein Verteilerelement. Mit 6 ist eine Vorsäule bezeichnet und mit 8 die darin enthaltene Sorbenspackung. 9 ist die Sorbenspackung der Trennsäule und 10 ist ein Gittergerüst.

Die erfindungsgemäßen Säulen sind ganz analog den im Stand der Technik bekannten Säulen aufgebaut, das heißt, sie bestehen im wesentlichen aus einem Säulenrohr (1), das mit Sorbens (9) gefüllt ist und an den Enden Einlaß- und Auslaßvorrichtungen aufweist, z.B. Reduzierverschraubungen (2), sowie Vorrichtungen zur Verteilung des durch die Einlaßvorrichtung zugeführten Flüssigkeitsstromes, wie z.B. eine Fritte (4) und ein Verteilerelement (5). Die Säulen sind dabei in der Regel symmetrisch aufgebaut, das heißt, Einlaß- und Auslaßteil der Säule sind identisch und daher austauschbar.

Zusätzlich besitzen die erfindungsgmäßen Säulen jedoch noch zumindest ein Stützelement. Dies kann z.B. eine in den Figuren I - IV und VII gezeigte Lochplatte (3) sein, die fest in das Säulenrohr (1) eingepaßt ist und so dem erheblichen Feststoffdruck des Sorbens (9) im Innern der Säule standhalten kann. Eine solche Lochplatte (3) ist

PAT LOG 4 270684

an zumindest einem Ende der Säule angebracht, vorzugsweise jedoch an beiden Enden. Die Lochplatte (3) kann aus einem sowohl in chemischer als auch mechanischer Hinsicht widerstandfähigen Material bestehen. Bevorzugt werden Lochplatten aus Keramik, Glas oder Edelstahl verwendet.

Zum Befüllen der Säule wird der Auslaßteil so verschlossen, wie in Figur I gezeigt, während am Einlaßende, wie in Figur II gezeigt, lediglich die Lochplatte (3) montiert ist. Nach Aufsetzen einer üblichen Füllvorrichtung wird nun eine Sorbensaufschlämmung in die Säule gepumpt, wobei das Sorbens (9) von dem am Auslaßende befindlichen Verteilerelement (5) und Fritte (4) bzw. nach Aufbau eines ausreichenden Feststoffdruckes auch von der Lochplatte (3) zurückgehalten wird, während die Trägerflüssigkeit im wesentlichen ungehindert ablaufen kann. Sobald die Säule mit Sorbens gefüllt ist und dieses noch einige Millimeter über der Lochplatte steht, kann die Füllpumpe abgeschaltet und die Füllvorrichtung abgenommen werden. Danach kann das Sorbens über der Lochplatte entfernt und die Säule verschlossen werden.

Um sowohl eine problemlose Füllung der Säule als auch eine sichere Stabilisierung der Packung zu gewährleisten, ist es vorteilhaft, die Dimensionen der Öffnungen in der Lochplatte (3) so zu wählen, daß die freie Öffnung etwa im Bereich des 100 bis 200fachen des mittleren Teilchendurchmessers der Sorbensteilchen liegt. Für die üblichen Sorbentien im Bereich von etwa 5 bis etwa 50 µm werden daher Öffnungen von etwa 1 bis etwa 5 mm, insbesondere von etwa 1 bis etwa 2 mm, bevorzugt.

Die Form der Öffnungen spielt dabei nur eine untergeordnete Rolle. Zwar werden runde Öffnungen bevorzugt, diese können jedoch z.B. auch oval, schlitzförmig oder 3-, 4- oder mehreckig sein. Die Öffnungen in der Lochplatte (3) müssen auch nicht gerade sein, so wie es in den Zeichnungen angedeutet ist, sondern können auch konisch verlaufen, so daß die Öffnungen an der Unter- und Oberseite der Lochplatte (3) unterschiedliche Größen aufweisen. In diesem Fall beziehen sich die oben angegebenen Maße auf die jeweils kleinste Dimension. Auch bei von der Kreisform abweichenden Öffnungen bezieht sich das optimale Öffnungsmaß auf die kürzeste, den Schwerpunkt der Öffnung schneidenden Gerade.

Aufgrund der relativ kleinen Öffnungen und des hohen Preßdruckes, unter dem die Sorbensteilchen stehen, kann eine Spannungsentlastung der Sorbenspackung (9) nur in eine geringe Tiefe der Packung erfolgen, so daß die Packung auch ohne Anbringen eines Verschlußelementes stabil bleibt. Der Benutzer der Säule kann daher problemlos die Reduzierverschraubung (2) und die gegebenenfalls vorhandenen Fritten (4) und Verteilerelemente (5) austauschen. Aus diesem Grunde ist es vorteilhaft, die erfindungsgemäße Lochplatte (3) an beiden Enden der Säule vorzusehen.

Die obere Lochplatte (3) muß nicht am Säulenende angebracht sein, sondern kann auch innerhalb des Säulenrohrs (1), z.B. etwa einige Zentimeter vom Ende des Säulenrohrs (1) fixiert werden. Dadurch bleibt Raum für eine Vorsäule (6), die ebenfalls leicht austauschbar ist.

Die erfindungsgemäße Lochplatte (3) hat neben der Packungsstabilisierung den Vorteil, daß es beim Füllen der Säule,
insbesondere beim Arbeiten mit relativ hohen Suspensionsströmungsgeschwindigkeiten an der Lochplatte (3) zu einer
Verwirbelung der Strömung kommt, wodurch eine verbesserte
Packungsdichte erzielbar ist.

Eine weitere bevorzugte Ausgestaltung der Erfindung besteht
in der Verwendung eines Stützgerüstes (10) als Stützelement.
Dies kann beispielsweise ein wabenartig aufgebautes Gerüst
aus einem chemisch und mechanisch stabilem Werkstoff wie
z.B. Edelstahl oder armiertem Kunststoff sein, das vor dem
Füllen der Säule in das leere Säulenrohr (1) eingebracht
wird. Nach dem Füllen der Säule sind die Gerüstteile über
die gesamte Säulenlänge von der Sorbenspackung (9) umschlossen. Beim Entspannen des Fülldruckes kann sich die
Packung an dem Gerüst abstützen, wodurch ein Entspannen
der Sorbenspackung verhindert wird.

Die erfindungsgemäße Lochplatte (3) ist insbesondere bei
kleineren Säulendurchmessern von z.B. bis zu 50 oder
100 mm sehr vorteilhaft, da sie auf sehr einfache Weise
eine zuverlässige Stabilisierung der Sorbenspackung (9)
bewirkt. Je größer jedoch der Säulendurchmesser wird,
desto stabiler muß die Lochplatte (3) ausgelegt werden,
um dem hohen Innendruck der Sorbenspackung (9) standhalten zu können. Durch die Einlage eines Stützgerüsts
(10) in das Säulenrohr (1) ist jedoch eine Stabilisierung
der Sorbenspackung (9) durch Eigenspannung auch bei großen
Säulendurchmessern, die 500 bis 1000 mm und darüber betragen können, ohne weiteres möglich.

PAT LOG 4 270684

Neben den eingehend beschriebenen bevorzugten Ausgestaltungen der Erfindung werden dem Fachmann aufgrund der Lehre dieser Anmeldung ohne weiteres äquivalente Lösungen zugänglich sein. Entscheidend ist dabei lediglich, daß die Sorbenspackung entlang des Säulenquerschnitts in Einzelsegmente aufgeteilt wird, die sich sowohl gegenseitig als auch gegen ein oder mehrere Stützelemente abstützen und damit so gegeneinander verkeilen und verklemmen können, daß daraus eine Stabilisierung der Sorbenspackung gegen eine Druckentspannung erzielt wird. Um dieses Ziel zu erreichen, ist es auch ohne weiteres möglich, mehrere verschiedene Stützelemente miteinander zu kombinieren, z.B. ein Stützgerüst (10) mit einer Lochplatte (3). Es ist weiterhin möglich, ein erfindungsgemäßes Stützelement mit einer konventionellen Vorrichtung zur Stabilisierung der Sorbenspackung zu kombinieren. So kann beispielsweise auch eine Säule mit einem Stützgerüst (10) zusätzlich mit einem Kompressionskolben entsprechend DOS 30 21 366 ausgerüstet sein. In jedem Fall ist eine deutliche Verbesserung der Langzeitstabilität der Sorbenspackung zu beobachten, wodurch die Trennleistungen der erfindungsgemäßen Säule erheblich verbessert werden.

Merck Patent Gesellschaft
mit beschränkter Haftung

0176891

6100 Darmstadt

⌣ | ⌣

Patentansprüche

1. Säule für die Hochdruckflüssigkeitschromatographie, im
wesentlichen bestehend aus einem mit einem Sorbens befüllbaren Rohr und einer Einlaß- und einer Auslaßvorrichtung an den Enden des Rohres, dadurch gekennzeichnet,
daß in dem Rohr Stützelemente zur Stabilisierung der
Sorbenspackung vorgesehen sind.

2. Säule nach Anspruch 1, dadurch gekennzeichnet, daß zumindest ein Ende des Säulenrohres mit einer Lochplatte
verschlossen ist.

3. Säule nach Anspruch 1, dadurch gekennzeichnet, daß im
Säulenrohr ein Stützgerüst enthalten ist.

4. Säule nach Anspruch 2, dadurch gekennzeichnet, daß der
Durchmesser der Durchlässe in der Lochplatte etwa 1
bis etwa 5 mm beträgt

5. Säule nach Anspruch 3, dadurch gekennzeichnet, daß das
Stützgerüst aus einem wabenartigen Metallgeflecht besteht, wobei die größte Weite der einzelnen Wabe etwa
1 bis etwa 5 mm beträgt.

6. Säule nach Anspruch 1 und 2, dadurch gekennzeichnet,
daß die Lochplatte so weit vom Ende des Säulenrohres
angeordnet ist, daß zwischen Lochplatte und Einlaßvorrichtung Raum für die Aufnahme einer Vorsäulenpackung verbleibt.

7. Verfahren zum Füllen einer Säule für die Hochdruckflüssigkeitschromatographie, wobei die Säule an einem Ende mit einer ein Filterelement enthaltenden Auslaßvorrichtung verschlossen wird und vom anderen Ende her über eine Füllvorrichtung mit einer Aufschlämmung eines Sorbensmaterials in einer Trägerflüssigkeit unter einem vorgegebenen hohen Druck befüllt wird, wobei das Sorbensmaterial von dem Filterelement zurückgehalten wird, während die Trägerflüssigkeit weitgehend ungehindert passieren kann, und nach dem Befüllen an der Eingangsseite mit einer Einlaßvorrichtung verschlossen wird, dadurch gekennzeichnet, daß vor dem Befüllen in das Säulenrohr zumindest ein Stützelement eingebracht wird, welches das Entspannen der Sorbenspackung nach dem Ende des Befüllens verhindert.

8. Verwendung einer Säule nach Anspruch 1 oder 7 in der Hochdruckflüssigkeitschromatographie.

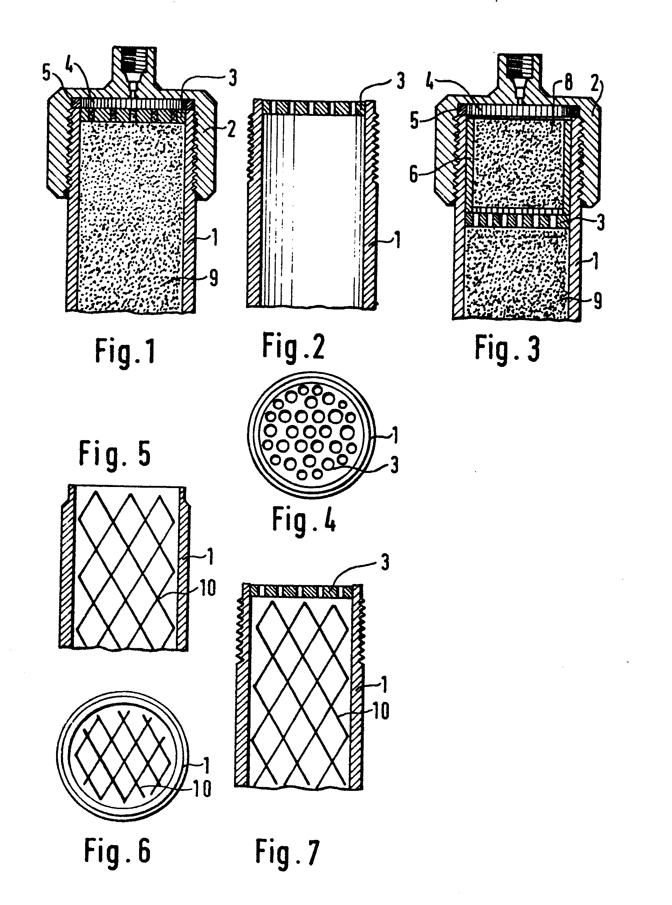

Fig.1   Fig.2   Fig.3

Fig.4

Fig.5

Fig.6   Fig.7